# EUROPÄISCHE PATENTANMELDUNG

(11) **EP 0 940 613 A1**
(43) Veröffentlichungstag der Anmeldung: **08.09.1999**
(21) Anmeldenummer: 99104253.2
(22) Anmeldetag: 03.03.1999
(51) Int. Cl.: F16K 27/02, F16K 1/06, F16K 1/12

(54) **Auslaufarmatur**

(30) Priorität: 06.03.1998 DE 19809781; 29.04.1998 DE 19819033
(71) Anmelder: SCHUBERT & SALZER INGOLSTADT-ARMATUREN GmbH, 85053 Ingolstadt (DE)
(72) Erfinder: Kraus, Heinz, 85126 Münchsmünster (DE)
(74) Vertreter: Canzler, Rolf, Dipl.-Ing.

(57) **Zusammenfassung**

Die Erfindung betrifft eine Auslaufarmatur mit einem einen Zulaufkanal und einen Auslaufkanal aufweisenden Gehäuse und einem von dem Gehäuse abnehmbaren Ventiloberteil, in welchem eine Ventilspindel zum Verstellen eines Absperrorganes gegenüber dem Ventilsitz angeordnet ist. Der Zulaufkanal und das Ventiloberteil liegen auf einer gemeinsamen Achse, von welcher der Auslauf abzweigt und zu welcher der Ventilsitz quer im Zulaufkanal angeordnet ist. Das Absperrorgan ist konusförmig ausgebildet und dichtet mit seiner Mantelfläche gegen eine entsprechend ringförmig ausgebildete Dichtfläche des Ventilsitzes ab. Der Auslauf 3 zweigt in einem Winkel α > 90° von der Gehäuseachse 11 ab. Der Ventilsitz 61 ist austauschbar im Zulaufkanal 14, 141 angeordnet.

## Beschreibung

Die Erfindung betrifft eine Auslaufarmatur mit einem einen Zulaufkanal und einen Auslauf aufweisenden Gehäuse, bei welchem im Zulaufkanal ein Ventilsitz angeordnet ist, und einem von dem Gehäuse abnehmbaren Ventiloberteil, in welchem eine Ventilspindel zum Verstellen eines Absperrorganes gegenüber dem Ventilsitz angeordnet ist.

Üblicherweise sind die Auslaufarmaturen mit Geradsitz oder auch Schrägsitz ausgeführt. Die Strömung erfährt durch den Ventilsitz jeweils eine starke Umlenkung. Diese Ausbildung ist nicht nur strömungstechnisch ungünstig, sondern verursacht störende Geräusche. Im Zusammenhang mit sog. frostgeschützten Außenwandventilen (Prospekte WSV GmbH, Firma Kemper) ist eine Auslaufarmatur bekannt, bei welcher der Zulaufkanal und das Ventiloberteil auf einer gemeinsamen Achse liegen, von welcher der Auslauf in Art eines Eckventiles rechtwinklig abzweigt. Der Ventilsitz ist bei diesen Ventilen quer im Zulaufkanal angeordnet, sodaß durch diesen Ventilsitz selbst zwar keine Strömungsumlenkung erfolgt, jedoch muß der als Platte ausgebildete Ventilkegel, der wie eine Prallplatte wirkt, mit zweifacher 90°-Umlenkung der Strömung umströmt werden, sodaß ein erheblicher Druckverlust und auch Geräusche entstehen. Da derartige Armaturen häufig zum Anschluß von Schläuchen benützt werden, wirkt sich der Druckverlust besonders nachteilig aus.

Nachteilig ist in dieser Hinsicht auch der im Winkel von 90° angeordnete Auslauf derartiger Ventile.

Durch die DE 93 00 189 U1 ist ein Schrägsitzabsperrventil bekannt, das einen geraden Durchflußkanal mit einer schräg zum Durchflußkanal angeordneten Gewindespindel zum Verstellen eines als Halbkugel ausgebildeten Absperrorganes aufweist. Abgesehen davon, daß es sich nicht um ein Auslaufventil handelt, werden die Strömungsnachteile durch diese Ausbildung nicht beseitigt. Das Absperrorgan schließt gegen einen üblichen Ventilsitz mit seiner Stirnfläche ab und wirkt als Prallplatte.

Aufgabe der vorliegenden Erfindung ist es, eine Auslaufarmatur zu schaffen, die die beschriebenen Nachteile vermeidet, strömungsgünstig und damit auch geräuscharm ist.

Diese Aufgabe wird durch die Merkmale des Anspruchs 1 gelöst. Durch die erfindungsgemäße Ausbildung des Ventilsitzes und des Ventilkegels erfährt die Strömung eine minimale Umlenkung. Durch die axialsymmetrische Erweiterung des Gehäuses nach dem Ventilsitz wird der Zulaufdurchmesser mindestens nahezu unverändert aufrechterhalten oder auch vergrößert, so daß und eine Drosselwirkung vermieden ist. Durch eine strömungsgünstige Ausbildung des Absperrorganes gemäß den Merkmalen der Ansprüche 3 oder 4 fließt das aus dem Ventilsitz austretende Strömungsmedium ohne nennenwerte Verwirbelung und Drosselung zum Auslauf des Ventiles. Durch die ringförmige Dichtfläche des Ventilsitzes, die Teil einer Kegelfläche ist und den Zulaufkanal in die Erweiterung des Ventilgehäuses überführt, wird nicht nur die Strömung günstig geleitet, sondern auch ein schnelles Öffnen und Schließen des Ventiles bei geringem Stellweg erreicht. Die Führung des Absperrorganes an seinem abflußseitigen Ende durch entsprechende Stützen gewährleistet eine exakte Stellung des Absperrorganes gegenüber dem Ventilsitz und verhindert ein Schwingen des Absperrorganes sowie dadurch auftretende Geräusche. Insbesondere sind hierfür federnde Elemente am Ende der Stütze vorgesehen, die sich mit Vorspannung gegen das Ventilgehäuse abstützen, so daß eine spielfreie Führung gewährleistet ist.

Die Ausbildung der Auslaufarmatur gemäß Anspruch 13 ermöglicht auch eine Verwendung als Außenwandventil mit Frostsicherung. Generell hat sich als besonders strömungsgünstig die Abzweigung des Auslaufes in einem Winkel >90 gegenüber der Gehäuseachse erwiesen. Eine abrupte Strömungsumlenkung wird dadurch vermieden.

Unabhängig von der Ausbildung des Ventilsitzes hat sich der austauschbare Ventilsitz, gegebenenfalls auch kombiniert mit einem Rückflußverhinderer bei derartigen Auslaufventilen als äußerst vorteilhaft erwiesen. Auf einfache Weise kann dieser zusammen mit dem Rückflußverhinderer ausgetauscht werden, ohne daß Spezialwerkzeuge benötigt werden, um die Fehlerquelle zu beseitigen und damit Wasserverlust zu vermeiden.

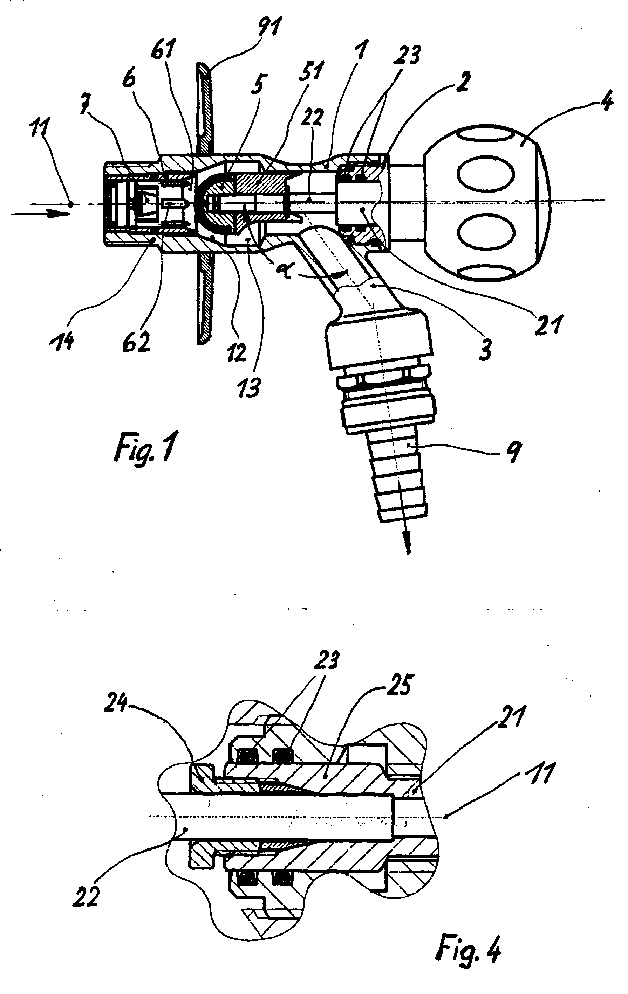

Weitere Einzelheiten der Erfindung werden anhand der Zeichnungen beschrieben. Es zeigen
- Fig. 1: eine Auslaufarmatur gemäß der Erfindung im Schnitt
- Fig. 2: eine Ausführung der Auslaufarmatur verlängert durch ein Zwischenstück.
- Fig. 3 u.4: Einzelheiten der Ausführung nach Fig.2
- Fig. 5: die Auslaufarmatur gemäß Fig.1 in Schließstellung

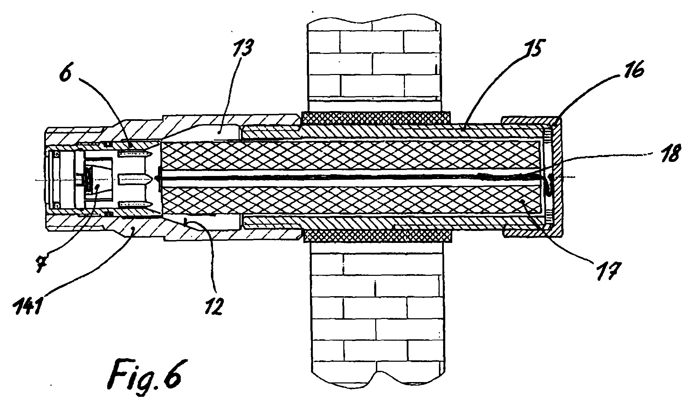

- Fig. 6: die Auslaufarmatur gemäß Fig.2 mit Füllkörper

Der Zulaufkanal 14 der Auslaufarmatur und das Ventiloberteil 2 sind auf einer gemeinsamen Achse 11 angeordnet. Das Ventiloberteil 2 ist in üblicher Weise in das Gehäuse 1 eingeschraubt und dient zur Lagerung der Ventilspindel 21, an welcher der Griff 4 befestigt ist. Über die Verbindungsstange 22 ist die Ventilspindel 21 mit dem Absperrorgan 5 verbunden. Dichtungen 23 sorgen dafür, daß vom Gehäuse 1 kein Wasser in das Ventiloberteil 2 eindringt.

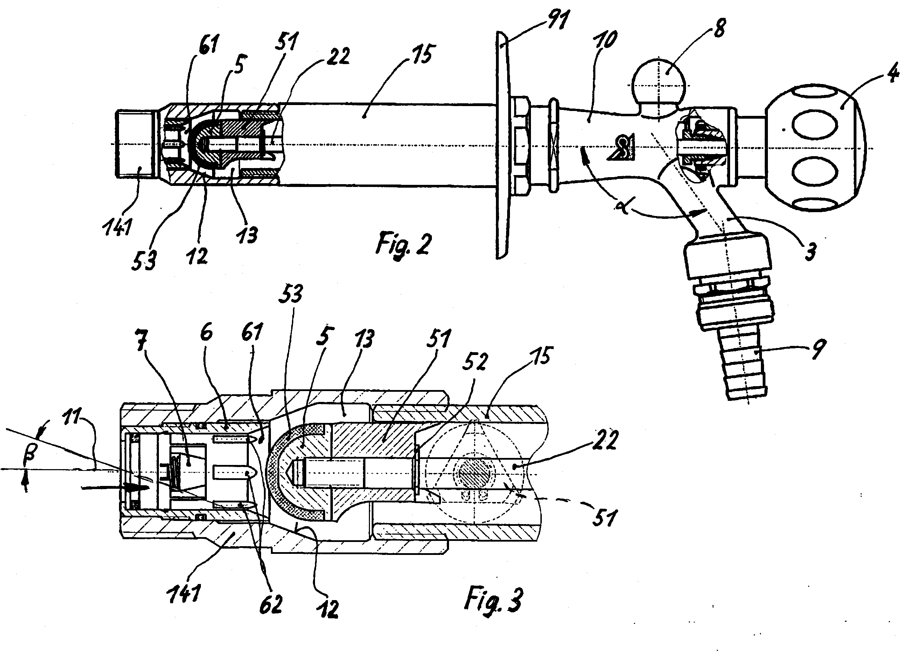

Das Ventilgehäuse 1 ist rohrförmig gerade ausgebildet, sodaß auch der Ventilsitz 61 quer zum Zulaufkanal 14 angeordnet ist und in Richtung der Achse 11 des Gehäuses 1 durchströmt wird. In Achsrichtung gegenüber dem Ventilsitz 61 ist das Absperrorgan 5 angeordnet, das im Gehäuse 1 durch eine Stütze 51 geführt ist. Um einen möglichst geringen Strömungswiderstand zu bieten, ist diese Stütze 51 im Querschnitt dreieckförmig oder auch sternförmig ausgebildet und auf der Verbindungsstange 23 mittels eines Sprengringes 52 befestigt (siehe hierzu auch Fig.3). An ihrem Ende läuft die Stütze 51 in flügelartige Fortsätze aus, die als federnde Elemente 54 ausgebildet sind. Diese federnden Elemente 54 sind mit einer Vorspannung auf einen größeren Durchmesser als die Stütze 51 selbst versehen, so daß sie sich federnd an die Gehäuseinnenwand anlegen. Dadurch wird ohne große Passgenauigkeit eine spielfreie Führung im Gehäuse 1 oder dem Zwischenstück 15 erreicht. Unmittelbar vor dem Ventiloberteil 2 zweigt aus dem Ventilgehäuse 1 der Auslauf 3 in einem stumpfen Winkel α ab. Vorzugsweise liegt die Größe dieses Winkels α etwa bei 120° bis 130°. Auf diese Weise wird eine günstige Ableitung in den Auslauf 3 erreicht, ohne die Betätigung des Griffes 4 zu beeinträchtigen. Am Auslauf 3 ist ein Schlauchanschluß 9 angeschlossen.

Wie im einzelnen auch in Fig.3 gezeigt, ist das Gehäuse 1 im Hinblick auf einen möglichst geringen Durchflußwiderstand ausgebildet. In Durchflußrichtung nach dem Ventilsitz 61 erweitert sich das Gehäuse 1 radial in achsialer Richtung, so daß die Strömung aus dem Ventilsitz 61 mit einem Querschnitt, der mindestens dem Querschnitt des Ventilsitzes 61 entspricht, nahezu ohne Umlenkung das Absperrorgan 5 umströmen kann. Vorzugsweise ist die Erweiterung 13 achsialsymmetrisch zum Absperrorgan 5. Der Übergang in die Erweiterung 13 wird durch eine kegelige Fläche 12 gebildet. Der Winkel β der Mantellinie dieser Kegelfläche zur Achse 11 des Gehäuses 1 bezw. des Zulaufkanales 14 beträgt etwa 30° bis 40°. Er ist auf jeden Fall kleiner als 45°.

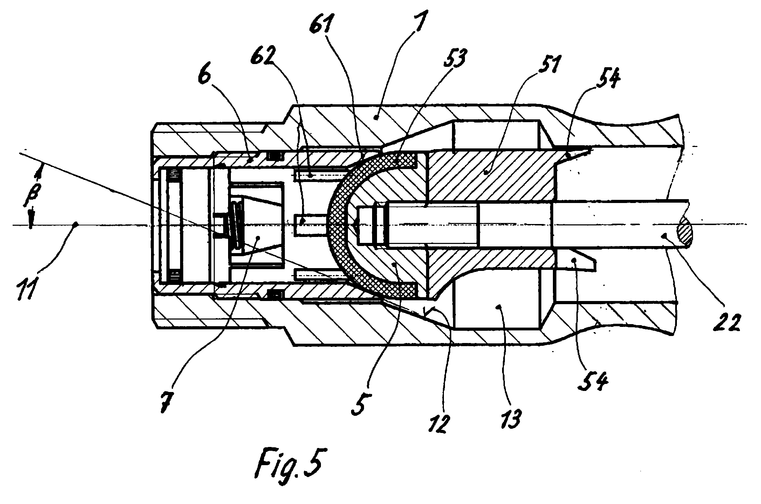

Durch Versuche hat sich gezeigt, daß diese Größe des Winkels β für die Strömung im Ventil am günstigsten ist. Außerdem ist es für die Öffnung und den Durchfluß des Ventils günstig, wenn die Geometrie des Ventilsitzes 61 und des Absperrorganes 5 so aufeinander abgestimmt sind, daß sich das Absperrorgan 5 in der Schließstellung möglichst weit in den Ventilsitz 61 eingreift, so daß sich das Absperrorgan 5 mit seiner axialen Seitenfläche an die ringförmige Dichtfläche 61 des Ventilsitzes anlegt. Diese Schließstellung ist in Fig. 5 im Detail dargestellt. Das Absperrorgan greift tief in den Ventilsitz ein, so daß die Dichtung im wesentlichen durch die Mantelfläche des Ventilkörpers 5 als durch dessen Stirnfläche erfolgt. Da der Ventilkörper 5 im gezeigten Ausführungsbeispiel eine halbkugelförmige Oberfläche besitzt und somit die Mantelfläche in die Stirnfläche übergeht, ist die Mantelfläche des Ventilkörpers 5 durch Tangenten mit einem Winkel kleiner 45° zur Achse des Ventilkörpers 5 gekennzeichnet.

Die Mantellinie dieser kegeligen Fläche muß nicht gerade sein. Sie kann auch gewölbt oder der Mantellinie des Absperrorganes 5 angepaßt sein. Für den Winkel β ist dann die Sehne zur Mantellinie maßgebend. Zweckmäßig ist die Krümmung der Mantellinie des Ventilsitzes 61 stets geringer als die der Mantellinie des Absperrorganes 5. Sie kann auch einen negativen Wert gegenüber der Krümmung des Absperrorganes 5 annehmen. Wesentlich dabei ist, daß die Berührung zwischen Ventilkörper 5 und der Dichtfläche 61 auf einem möglichst schmalen Ringstreifen erfolgt, der sich strömungsgünstig zur Kegelfläche 12 verhält.

An das Absperrorgan 5 schließt die Stütze 51 an, die ebenfalls so ausgebildet ist, daß der Strömungquerschnitt nicht eingeengt wird. Die Stütze 51 kann auch in das Absperrorgan 5 integriert und mit diesem einstückig ausgeführt sein. Schließlich gelangt die Strömung vor das Ventiloberteil 2, welches allein dem geraden Durchfluß entgegensteht. Durch die Anordnung des Auslaufes 3 in einem stumpfen Winkel α zur Achse 11 erfolgt eine strömungsgünstige Ableitung in den Auslauf 3.

Durch die oben beschriebene Gestaltung von Ventilsitz 61 und Mantelfläche des Absperrorganes 5 wird beim Abheben des Absperrorganes 5 vom Ventilsitz 61 sofort ein gut zu dosierender Strömungsquerschnitt frei, der vorallem auch in jedem Stadium der Öffnung günstig für den Durchfluß ist. Die bei kleiner Öffnung üblichen Durchflußgeräusche von herkömmlichen Auslaufventilen entfallen.

Der Ventilsitz 61 ist Teil der Kegelfläche 12, die die Strömung in die Erweiterung 13 des Gehäuses 1 leitet. Der Ventilsitz 61 muß aber nicht Teil des Gehäuses 1 sein. Bei der gezeigten Ausführung ist eine auswechselbare Patrone 6 vorgesehen, die an ihrem abströmseitigen Rand den als Kegelfläche ausgebildeten Ventilsitz 61 trägt. Dieser arbeitet mit der Mantelfläche des Absperrorganes 5 zusammen, das konusförmig ausgebildet ist und eine Stromlinienform aufweist, beispielsweise eine Halbkugelform. Die dem Ventilsitz 61 zugewandte Mantelfläche des Absperrorganes 5 ist vorzugsweise mit einem elastische Belag 53 überzogen, um eine gute und zuverlässige Abdichtung zu erreichen.

Außer dem Ventilsitz kann in der auswechselbaren Patrone 6 auch noch ein Rückflußverbinderer untergebracht sein. Um die Patrone 6 auswechseln zu können, sind Kerben 62 vorgesehen, in die ein Steckschlüssel eingreifen kann, um die Patrone 6 ein- oder ausschrauben zu können. Durch die Auswechselbarkeit ist es für jedermann möglich, den defekten Ventilsitz oder auch Rückflußverhinderer zu ersetzen. Das Nachfräsen des Ventilsitzes entfällt, es wird kein Spezialwerkzeug und auch keine Fachkraft dazu benötigt. Unabhängig von der Ausbildung des ventilsitzes und des Absperrorganes hat dieser austauschbare Ventilsitz besondere Vorteile bei Außenwandventilen mit Frostsicherung, bei denen das Ventilgehäuse um die Mauerstärke verlängert und der Ventilsitz zum Nachfräsen schwer zugänglich ist.

In Fig.2 ist eine Ausführung der Auslaufarmatur gezeigt, bei welcher das Gehäuse 10 mit dem Auslauf 3 und dem Ventiloberteil 2 durch ein Zwischenstück 15 von dem Zulaufkanal 141 getrennt ist, in welchem der Ventilsitz 61 angeordnet ist. Das Zwischenstück 15 verlängert das rohrförmige Gehäuse 10, sodaß das Absperrorgan 5 der an der Außenseite einer Mauer befestigten Auslaufarmatur auf der Innenseite der Mauer zu liegen kommt. Die Blende 91 deckt dabei den Mauerdurchbruch für das Zwischenstück 15 ab und bietet so gleichzeitig einen Schutz gegen die Außentemperatur. Ein Belüfter 8 sorgt dafür, daß nach dem Absperrorgan 5 im Verlängerungsstück 15 und im Gehäuse 10 kein Wasser stehen bleibt und bei Frost eingefrieren kann. Das jeweilige Abstellen des Wasserzuflusses und Entleeren der Auslaufarmatur bei Frostgefahr entfällt dadurch.

Die Verbindungsstange 22 ist entsprechend dem Zwischenstück 15 bei dieser Ausführung verlängert. Hier macht sich die Führung durch die Stütze 51 und ihre federnden Elemente 54 besonders vorteilhaft bemerkbar durch Verhinderung von Schwingungen dieser Verbindungsstange 22 oder auch des Absperrorganes 5. Es kann in diesem Fall auch zweckmäßig sein, mehrere Stützen 51 verteilt über die Länge der verbindungsstange 22 vorzusehen, um bei großen Längen des Zwischenstückes 15 die freien ungestützten Längen der Verbindungsstange 22 möglichst klein zu halten. An dem einen Ende der Verbindungsstange 22 ist das Absperrorgan 5 befestigt, während das andere Ende mittels einer Klemmringverschraubung 24 mit der Ventilspindel 21 verbunden ist. Die Ventilspindel 21 weist zu diesem Zweck an ihrem Ende eine Buchse 25 auf, in welche die Klemmringverschraubung 24 eingeschraubt ist (Fig. 4). Durch die Dichtungen 23 ist die Ventilspindel 21 gegen eindringendes Wasser gesichert. Auf diese Weise wird eine starre Verbindung zwischen Ventilspindel 21 und dem Absperrorgan 5 auch bei großen Distanzen auf einfache Weise erreicht, die sich auch nicht infolge der Strömung oder Dauerbetätigung lockert.

Üblicherweise werden bei der Erstellung eines Rohbaues eines Gebäudes insbesondere die Unterputzrohrleitungen verlegt, jedoch zur Schonung der Armaturen diese erst nach Fertigstellung des Putzes und der Malerarbeiten montiert. Die Rohrleitungen werden nach der Installation zur Überprüfung der Dichtigkeit mit Wasser gefüllt und unter Druck gesetzt, anstelle der Armaturen befinden sich zunächst Verschlußkappen 16. Bei Frost kann dadurch die neu installierte Leitung einfrieren und zerstört werden. Bei der beschriebenen erfindungsgemäßen Auslaufarmatur wird deshalb zunächst das rohrförmige Zwischenstück 15, jedoch ohne das Ventilgehäuse 10 montiert und mit einer Verschlußkappe 16 verschlossen. Um eine Zerstörung des Zwischenstückes 15 durch Frost zu vermeiden, ist für dieses ein elastischer Füllkörper 17, beispielsweise aus Styropor, vorgesehen, welcher in der Lage ist, die Ausdehnung des Wassers bei Frost aufzufangen. Dieser Füllkörper 17 wird bei Montage des Gehäuses 10 entfernt und etwaige Verschmutzungen der Leitungen dabei ausgespült. Um das Herausziehen ohne Werkzeug zu erleichtern, ist der Füllkörper 17 mit einer Schnur oder einem Kettchen als Zugmittel 18 versehen, an welchem der Füllkörper 17 nach öffnen der Verschlußkappe 16 herausgezogen werden kann. Damit der Verschlußkörper 17 nicht zu weit in die Rohrleitung hineinrutschen kann, ist der Füllkörper 17 mit seinem Durchmesser so bemessen, daß er sich an der Einsatzpatrone 6 abstützt. Eine andere Art der Befestigung zur Verhinderung des Hineingleitens in die Rohrleitung kann auch dadurch vorgesehen sein, daß die Schnur 18 zum Herausziehen des Füllkörpers 17 an der Verschlußkappe 16 befestigt ist, so daß beim Lösen der Verschlußkappe 16 gleichzeitig auch der Füllkörper 17 aus dem Zwischenstück 15 herausgezogen werden kann.

### Bezugszeichenliste

- 1, 10: Gehäuse
- 11: Gehäuseachse
- 12: Kegelfläche
- 13: Erweiterung
- 14: Zulaufkanal
- 15: Zwischenstück
- 16: Verschlußkappe
- 17: elast. Füllkörper
- 18: Zugelement
- 2: Ventiloberteil
- 21: Ventilspindel
- 22: Verbindungsstange
- 23: Dichtung
- 24: Klemmringverschraubung
- 25: Buchse
- 3: Auslauf
- 4: Griff
- 5: Absperrorgan
- 51: Stütze
- 52: Sprengring
- 53: elastischer Belag
- 54: federnde Elemente
- 6: Einsatzpatrone
- 61: Ventilsitz, ringförmige Dichtfläche
- 62: Kerben
- 7: Rückflußverhinderer
- 8: Belüfter
- 9: Schlauchanschluß
- 91: Blende
- α: Auslaufwinkel
- β: Erweiterungswinkel

## Patentansprüche

1. Auslaufarmatur mit einem einen Zulaufkanal und einen Auslauf aufweisenden Gehäuse, bei welchem im Zulaufkanal ein Ventilsitz angeordnet ist, und einem von dem Gehäuse abnehmbaren Ventiloberteil, in welchem eine Ventilspindel zum Verstellen eines Absperrorganes gegenüber dem Ventilsitz angeordnet ist und der Zulaufkanal und das Ventiloberteil auf einer gemeinsamen Achse liegen, von welcher der Auslauf abzweigt und zu welcher der Ventilsitz quer im Zulaufkanal angeordnet ist, **dadurch gekennzeichnet, daß** das Absperrorgan (5) konusförmig ausgebildet ist und die auf seiner Mantelfläche vorgesehene Dichtfläche mit einer entsprechenden ringförmigen Dichtfläche (61) des Ventilsitzes zusammenarbeitet.

2. Auslaufarmatur nach Anspruch 1, **dadurch gekennzeichnet, daß** das Gehäuse (1) in Durchflußrichtung nach dem Ventilsitz (61) eine achsialsymmetrische Erweiterung (13) aufweist.

3. Auslaufarmatur nach einem der Ansprüche 1 oder 2, **dadurch gekennzeichnet, daß** das Absperrorgan (5) als Strömungskörper ausgebildet ist.

4. Auslaufarmatur nach Anspruch 3, **dadurch gekennzeichnet, daß** das Absperrorgan (5) halbkugelartig ausgebildet ist.

5. Auslaufarmatur nach einem oder mehreren der Ansprüche 1 bis 4, **dadurch gekennzeichnet, daß** das Absperrorgan (5) an seinem abflußseitigen Ende eine Stütze (51) aufweist, durch die es im Ventilgehäuse (1; 15) geführt wird.

6. Auslaufarmatur nach Anspruch 5, **dadurch gekennzeichnet, daß** die Stütze (51) einen sternförmigen Querschnitt aufweist.

7. Auslaufarmatur nach einem der Ansprüche 5 oder 6, **dadurch gekennzeichnet, daß** die Stütze (51) federnde Elemente (54) aufweist, durch die die Stütze (51) spielfrei im Gehäuse (1; 15) geführt wird.

8. Auslaufarmatur nach einem oder mehreren der Ansprüche 1 bis 7, **dadurch gekennzeichnet, daß** die ringförmige Dichtfläche des Ventilsitzes (61) Teil einer Kegelfläche ist, die den Zulaufkanal (14; 141) in die Erweiterung (13) des Ventilgehäuses (12) überführt.

9. Auslaufarmatur nach Anspruch 8, **dadurch gekennzeichnet, daß** die Mantellinie der Kegelfläche einen Winkel (β) von 30° bis 40° zur Achse (11) des Zulaufkanales (14; 141) einnimmt.

10. Auslaufarmatur nach einem oder mehreren der Ansprüche 1 bis 9, **dadurch gekennzeichnet, daß** das Absperrorgan (5) starr mit der Ventilspindel (21) verbunden ist.

11. Auslaufarmatur nach einem oder mehreren der Ansprüche 1 bis 10, **dadurch gekennzeichnet, daß** das Gehäuse (10) durch ein Zwischenstück (15) verlängerbar ist, das zwischen dem Zulaufkanal (141) mit dem Ventilsitz (61) und dem Auslauf (3) einsetzbar ist.

12. Auslaufarmatur nach einem oder mehreren der Ansprüche 1 bis 11, **dadurch gekennzeichnet, daß** die Ventilspindel (21) mit dem Absperrorgan (5) durch eine Verbindungsstange (22) verbunden ist, an deren einem Ende das Absperrorgan (5) befestigt ist, während das andere Ende mittels einer Klemmringverschraubung (24) mit der Ventilspindel (21) verbunden ist.

13. Auslaufarmatur mit einem einen Zulaufkanal und einen Auslauf aufweisenden Gehäuse, bei welchem im Zulaufkanal ein Ventilsitz angeordnet ist, und einem von dem Gehäuse abnehmbaren Ventiloberteil, in welchem eine Ventilspindel zum Verstellen eines Absperrorganes gegenüber dem Ventilsitz angeordnet ist und der Zulaufkanal und das Ventiloberteil auf einer gemeinsamen Achse liegen, von welcher der Auslauf abzweigt und zu welcher der Ventilsitz quer im Zulaufkanal angeordnet ist, insbesondere nach einem oder mehreren der Ansprüche 1 bis 12, **dadurch gekennzeichnet, daß** der Auslauf (3) in einem Winkel (α) größer als 90° von der Gehäuseachse (11) abzweigt.

14. Auslaufarmatur nach Anspruch 13, **dadurch gekennzeichnet, daß** der Winkel α zwischen 110° und 140° beträgt.

15. Auslaufarmatur mit einem einen Zulaufkanal und einen Auslauf aufweisenden Gehäuse, bei welchem im Zulaufkanal ein Ventilsitz angeordnet ist, und einem von dem Gehäuse abnehmbaren Ventiloberteil, in welchem eine Ventilspindel zum Verstellen eines Absperrorganes gegenüber dem Ventilsitz angeordnet ist und der Zulaufkanal und das Ventiloberteil auf einer gemeinsamen Achse liegen, von welcher der Auslauf abzweigt und zu welcher der Ventilsitz quer im Zulaufkanal angeordnet ist, insbesondere nach einem oder mehreren der Ansprüche 1 bis 14, **dadurch gekennzeichnet, daß** der Ventilsitz (61) austauschbar im Zulaufkanal (14; 141) angeordnet ist.

16. Auslaufarmatur nach Anspruch 15, **gekennzeichnet durch** eine austauschbare Patrone (6), die sowohl den Ventilsitz (61), als auch einen Rückflußverhinderer (7) beinhaltet.

17. Auslaufarmatur, nach einem oder mehreren der Ansprüche 1 bis 16, **dadurch gekennzeichnet, daß** ein Belüfter (8) zur Entleerung des Raumes zwischen Absperrorgan (5) und Auslauf (3) vorgesehen ist.

18. Auslaufarmatur nach Anspruch 11, **gekennzeichnet durch** einen elastischen Füllkörper, der in dem Zwischenstück 15 anordenbar ist.

19. Auslaufarmatur nach Anspruch 18, **dadurch gekennzeichnet, daß** der Füllkörper aus Styropor besteht.

20. Auslaufarmatur nach den Ansprüchen 18 oder 19, **dadurch gekennzeichnet, daß** an dem Füllkörper ein Zugmittel angeordnet ist, um den Füllkörper aus dem Zwischenstück (15) herauszuziehen.

21. Auslaufarmatur nach Anspruch 19, **dadurch gekennzeichnet, daß** das Zugmittel mit einer Verschlußkappe zum Verschließen des Zwischenstückes (15) verbunden ist.
